# FASCICULE DE BREVET EUROPEEN

(11) **EP 4 597 057 B1**
(45) Date de publication et mention de la délivrance du brevet: **30.09.2026**
(21) Numéro de dépôt: 25154641.2
(22) Date de dépôt: 29.01.2025
(51) Int. Cl.: G01K 3/00, G01K 3/04, G01K 11/02, G01N 33/00, H01B 1/00, C08K 3/04, C08K 5/00, C08K 5/12, C08K 5/435

(54) **MATÉRIAU THERMOSENSIBLE POUR UN ÉLÉMENT DE DÉTECTION DE SURCHAUFFE ET MÉTHODE DE DÉTECTION D'ÉCHAUFFEMENT DANS UNE ARMOIRE ÈLECTRIQUE**
WÄRMEEMPFINDLICHES MATERIAL FÜR EIN ÜBERHITZUNGSDETEKTIONSELEMENT UND VERFAHREN ZUR ERKENNUNG EINER ÜBERHITZUNG IN EINEM SCHALTSCHRANK
HEAT-SENSITIVE MATERIAL FOR OVERHEATING DETECTION ELEMENT AND METHOD FOR DETECTING OVERHEATING IN AN ELECTRICAL CABINET

(30) Priorité: 30.01.2024 FR 2400891
(43) Date de publication de la demande: 06.08.2025
(73) Titulaire: SCHNEIDER ELECTRIC INDUSTRIES SAS, 92500 Rueil-Malmaison (FR)
(72) Inventeur: SPEZZATTI, Patricia, 38660 La Terrasse (FR); ARGOUD, Alexandra, 38330 Montbonnot-Saint-Martin (FR)
(74) Mandataire: Lavoix

(56) Documents cités:
- EP-A1- 3 512 056
- LIU YANG ET AL: "Overheat diagnosis of power cable based on gas sensors: Device/material exploration", SENSORS AND ACTUATORS B: CHEMICAL, vol. 350, 1 January 2022 (2022-01-01), NL, pages 130837, XP093190272, ISSN: 0925-4005, DOI: 10.1016/j.snb.2021.130837
- PIETSCH H E ET AL: "SACRIFICIAL COATINGS FOR IMPROVED DETECTION OF OVERHEATING IN GENERATORS", IEEE TRANS.POWER APPAR.& SYSTEMS,, vol. PAS-96, no. 5, 1 September 1977 (1977-09-01), pages 1675 - 1679, XP001412839

## Description

La présente invention concerne un matériau thermosensible pour la détection de surchauffe, et une méthode de détection d'échauffement dans une armoire électrique.

Des modes de réalisation concernent également un élément de détection de surchauffe réalisé en un tel matériau thermosensible, un équipement électrique comprenant un tel élément de détection, ainsi qu'une armoire électrique comprenant un tel équipement électrique.

Dans le domaine des appareils électriques de puissance d'une installation électrique, les appareils électriques sont généralement situés dans une armoire électrique, qui forme une enceinte de protection. Les appareils électriques sont généralement montés sur un tableau électrique, lui-même reçu dans l'enceinte de l'armoire électrique. Chaque appareil électrique comprend généralement une ou plusieurs plages de raccordement, auxquelles sont respectivement connectés des membres conducteurs électriques, tels que des câbles ou des jeux de barres, - dits *bus conducteurs* ou *busbaren* anglais -. Typiquement, chaque membre conducteur électrique est, à une extrémité, connecté et fixé à l'une des plages de raccordement au moyen d'une vis serrée dans un écrou.

À l'état monté, la vis traverse le membre conducteur électrique et la plage de raccordement et se visse dans l'écrou en appuyant le membre conducteur électrique contre la plage de raccordement pour assurer la connexion. Si la connexion entre le membre conducteur électrique et la plage de raccordement est mal serrée, la résistance électrique de la connexion augmente, et lorsque qu'un courant circule au travers de cette connexion, un échauffement localisé se produit au niveau de cette connexion, ce qui est une source potentielle de dysfonctionnement, voire d'accident si l'échauffement dépasse un certain seuil et cause par exemple un incendie. Pour des raisons normatives et/ou de sécurité, il est nécessaire de surveiller la qualité des connexions électriques, notamment en surveillant l'échauffement de ces connexions et/ou des membres conducteurs.

Il est aussi connu d'effectuer des prises de vues par caméra thermique au cours de visites d'inspection, afin de détecter des points chauds d'un tableau électrique. Seulement, le boitier électrique logeant le tableau doit être ouvert pour prendre les prises de vues, et par sécurité le tableau électrique est souvent mis hors tension, aussi les prises de vues ne reflètent pas fidèlement le fonctionnement normal des appareils électriques et ne permettent pas une surveillance en continu.

Il est aussi connu d'installer des sondes de température, par exemple des thermocouples ou des détecteurs électroniques de température, au sein du tableau électrique pour une surveillance en continu des connexions électriques. Cependant ces sondes de température, leur mise en place et l'exploitation de leurs mesures ont un coût élevé.

Liu et al. 2022: "Overheat diagnosis of power cable based on gas sensors: Device/material exploration", in SENSORS AND ACTUATORS B: CHEMICAL, vol. 350, 1 janvier 2022 page 130837, traite de la détection de la surchauffe de câbles ayant un revêtement en PVC avec un plastifiant DOTP à l'aide d'un capteur de gaz.

Une autre approche pour surveiller en continu une armoire électrique consiste à recourir à un dispositif de détection capable de détecter des émanations gaz, des microparticules et des composés organiques volatils, émis lorsque les gaines de câbles sont en surchauffe. EP-3 512 056-A1 décrit une telle approche, qui ne permet pas de surveiller spécifiquement un point particulier de l'armoire électrique, en particulier les connexions qui risquent de se desserrer.

Il est aussi connu, notamment de EP-3 336 813-A2, de fabriquer des étiquettes en incorporant des microcapsules dans un film polymère présentant une température de fusion prédéterminée. Les microcapsules renferment un gaz spécifique, prévu pour être détecté par un dispositif de détection spécifique. Cependant, les microcapsules sont relativement fragiles et leur mise en oeuvre reste délicate et limitée à la fabrication d'étiquettes, qui ne peuvent être placées directement sur des connexions électriques, par exemple sur les connexions vissées. Les étiquettes doivent en outre être placées une à une sur les éléments conducteurs à surveiller.

C'est à ces problèmes qu'entend particulièrement remédier l'invention, en proposant un matériau thermosensible pour la détection de surchauffe, le matériau thermosensible permettant une surveillance en continu, étant facile à mettre en oeuvre et pouvant s'adapter aux différentes conceptions de pièces.

À cet effet, l'invention a pour objet un matériau thermosensible pour un élément de détection de surchauffe, dans lequel :
- le matériau thermosensible est un matériau injectable à chaud et isolant électriquement, le matériau thermosensible incluant :
   - une matrice polymère, réalisée en un matériau polymère thermoplastique ou en élastomère thermoplastique présentant une première température de fusion,
   - un plastifiant, présentant une masse molaire et une deuxième température de fusion, la deuxième température de fusion étant inférieure à la première température de fusion, et
   - une charge sous forme de particules, notamment du noir de carbone,
- la masse molaire du plastifiant est choisie en fonction d'un premier seuil de température prédéterminé, le premier seuil étant strictement inférieur à la première température de fusion, de sorte que le matériau thermosensible est configuré pour relâcher des espèces volatiles issues du plastifiant échauffé et des particules de charge entraînées par le plastifiant lorsque le matériau thermosensible est soumis à une température supérieure au premier seuil de température, lesdites espèces volatiles issues du plastifiant et des particules de charge étant détectables par un dispositif de détection.

Grâce à l'invention, le matériau thermosensible est un matériau homogène, qui peut être produit par des moyens classiques sans risque de détérioration, en particulier par injection à chaud, par extrusion, etc. La mise en œuvre est particulièrement aisée. Il est ainsi possible de mettre en forme le matériau thermosensible au gré des besoins, que ce soit sous forme de pièce plastique plate et souple qui sera attachée aux jeux de barre, d'habillage d'écrou, etc. Les équipements électriques peuvent ainsi être pourvus de pièces réalisées dans le matériau thermosensible dès leur assemblage en usine, sans nécessiter d'opération supplémentaire lors de l'assemblage du tableau électrique, rendant possible la surveillance en continu des équipements électriques dès leur mise en place dans l'armoire électrique. Bien entendu, des pièces en matériau thermosensible de toutes formes peuvent être produites, pour faciliter leur mise en place sur les divers équipements électriques d'une armoire électrique existante, que ce soient des éléments conducteurs ou des appareils électriques.

Selon des aspects avantageux mais non obligatoires de l'invention, un tel matériau thermosensible peut incorporer une ou plusieurs des caractéristiques suivantes prises isolément ou selon toute combinaison techniquement admissible :
- Le premier seuil de température est choisi entre 125°C ±10°C et 160°C ± 10°C,
- pour un premier seuil de température donné, la masse molaire du plastifiant est comprise entre une valeur minimale et une valeur maximale,
- sur un graphe reliant le premier seuil de température sur un axe des abscisses à la masse molaire du plastifiant sur un axe des ordonnées, le premier seuil de température et la masse molaire définissent un système de coordonnées, le premier seuil de température et la masse molaire étant situés à l'intérieur d'un quadrilatère délimité par quatre points, respectivement :
   - un premier point ayant pour coordonnées {115 ; 150},
   - un deuxième point ayant pour coordonnées {115 ; 300},
   - un troisième point ayant pour coordonnées {170 ; 525}, et
   - un quatrième point ayant pour coordonnées {170 ; 400}.
- En représentation graphique, le premier seuil te température et la masse molaire sont situés à l'intérieur d'un quadrilatère délimité par quatre points, respectivement :
   - un cinquième point ayant pour coordonnées {115 ; 190},
   - le deuxième point ayant pour coordonnées {115 ; 300},
   - le troisième point ayant pour coordonnées {170 ; 525}, et
   - un sixième point ayant pour coordonnées {170 ; 450}.
- En représentation graphique, le premier seuil de température et la masse molaire sont situés dans une bande bordée, sur le bas, par un segment intermédiaire reliant le cinquième point au sixième point, la bande ayant une largeur, mesurée parallèlement à l'axe des ordonnées, égale à 75 g / mol.
- Un taux d'addition du plastifiant est compris entre 4% et 15% en poids relativement au poids de la matrice polymère thermoplastique.
- La charge est ajoutée entre 2 et 3% en poids relativement à la formulation complète du matériau thermosensible.
- La charge est du noir de carbone.
- La matrice polymère est le polyéthylène téréphtalate, tandis que le plastifiant est le DINCH, ajouté entre 4% et 15% en poids relatif à la matrice polymère.
- La matrice polymère est le polyamide 6/6, tandis que le plastifiant est le N-Ethyl o/p-toluene sulphonamide, qui est ajouté entre 4 et 15% en poids de la matrice polymère.
- La matrice polymère est le polybutylène téréphtalate, tandis que le plastifiant est le N-Ethyl o/p-toluène sulphonamide, qui est ajouté entre 4 et 15% en poids de la matrice polymère.

L'invention concerne aussi un élément de détection de surchauffe, comprenant un corps réalisé dans le matériau thermosensible tel que décrit précédemment.

L'invention concerne aussi un équipement électrique, qui comprend un conducteur électrique configuré pour être traversé par un courant électrique, dans lequel :
- l'équipement électrique comprend aussi un élément de détection de surchauffe tel que décrit précédemment,
- l'élément de détection de surchauffe est fixé sur le conducteur électrique.

L'invention concerne également une armoire électrique, dans laquelle :
- l'armoire électrique délimite une enceinte, et comprend :
   - un équipement électrique tel que décrit précédemment ;
   - un dispositif de détection, configuré pour détecter le flux de plastifiant et/ou de charges relâché par le matériau thermosensible autour de l'élément de détection de surchauffe lorsque la température du matériau thermosensible dépasse le premier seuil de température,
- l'élément de détection de surchauffe et le dispositif de détection sont situés dans l'enceinte de l'armoire électrique.

Selon un autre aspect, l'invention concerne une méthode de détection d'échauffement dans une armoire électrique, la méthode de détection comprenant :
- fournir une armoire électrique telle que décrite précédemment,
- faire circuler un courant électrique au travers de l'équipement électrique, de manière à provoquer un échauffement de l'élément de détection de surchauffe au-delà du premier seuil de température et dégager, autour du corps réalisé dans le matériau thermosensible, un flux de plastifiant et/ou d'espèces volatiles issues du plastifiant échauffé et/ou de particules de charge entraînées par le plastifiant,
- détecter le flux de plastifiant et/ou d'espèces volatiles issues du plastifiant échauffé et/ou de particules de charge entraînées par le plastifiant au moyen du dispositif de détection.

Cette méthode induit les mêmes avantages que ceux mentionnés ci-dessus au sujet de matières pour détection de surchauffe de l'invention.

L'invention sera mieux comprise, et d'autres avantages de celle-ci apparaîtront plus clairement à la lumière de la description qui va suivre, de plusieurs modes de réalisation d'un matériau thermosensible pour détection de surchauffe, d'un élément de détection, d'un équipement électrique, d'une armoire électrique et d'une méthode de détection, conformes à son principe, donnée uniquement à titre d'exemple et faite en référence aux dessins annexés, dans lesquels :
- [Fig 1] la figure 1 est une vue en perspective, schématique, d'une armoire électrique conforme à l'invention, l'armoire électrique comprenant un équipement électrique, lui aussi conforme à l'invention ;
- [Fig 2] la figure 2 représente, sur trois inserts a), b) et c), une borne de raccordement comprenant un élément de détection de surchauffe appartenant à l'équipement électrique de la figure 1, l'élément de détection de surchauffe étant lui-aussi conforme à l'invention ;
- [Fig 3] la figure 3 est un graphe illustrant certaines propriétés d'un matériau thermosensible utilisé pour la fabrication de l'élément de détection de surchauffe de la figure 2, le matériau thermosensible étant lui-aussi conforme à l'invention, et
- [Fig 4] la figure 4 représente, sur trois inserts a), b), et c), des éléments de détection de surchauffe conformes à des modes de réalisation alternatifs de l'invention.

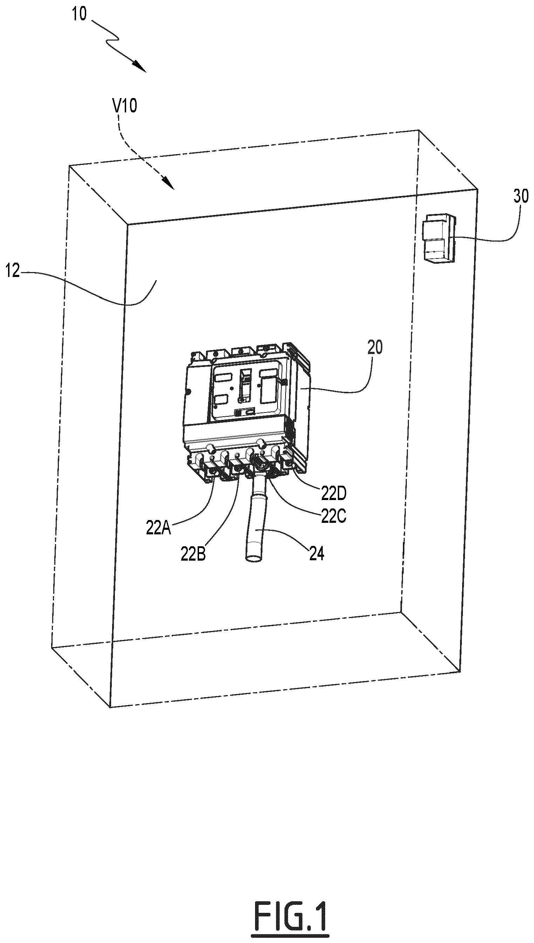

Une armoire électrique 10 est représentée sur la figure 1. L'armoire électrique 10 est représentée schématiquement par un parallélépipède et délimite une enceinte V10. L'armoire électrique 10 comprend au moins un premier appareil électrique 20, et un dispositif de détection 30. L'appareil électrique 20 et le dispositif de détection 30 sont situés dans la même enceinte - ici l'enceinte V10 - de l'armoire électrique 10. L'appareil électrique 20 et le dispositif de détection 30 sont ici fixés sur un panneau 12, qui forme un fond de l'enceinte V10.

L'appareil électrique 20 comprend au moins une plage de connexion 22, qui est configurée pour être connectée à un autre élément de l'armoire électrique 10, par exemple un autre appareil électrique d'un type identique à l'appareil électrique 20, ou bien un autre appareil électrique d'un type différent, ou bien à un élément conducteur tel qu'un câble ou un jeu de barres métalliques. Dans l'exemple illustré, l'appareil électrique 20 est un disjoncteur triphasé, et les plages de connexion 22 incluent quatre plages d'entrée, référencées 22A, 22B, 22C et 22D, et quatre plages de sortie, qui ne sont pas visibles sur les figures.

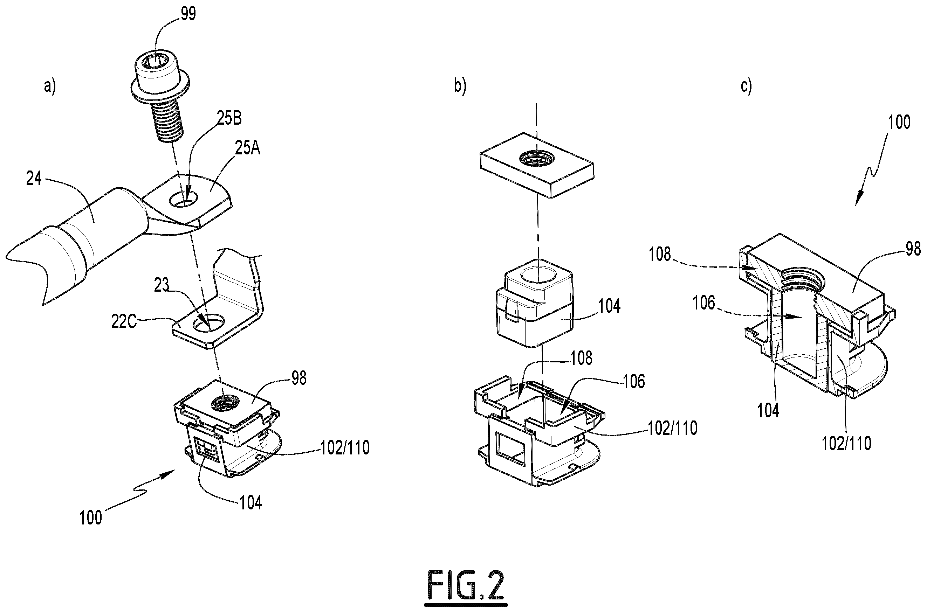

Une des plages de connexion 22, ici la plage d'entrée 22C, est représentée connectée à un élément conducteur 24, ici un câble. Ce qui est valable pour l'une des plages de connexion 22 est transposable aux autres plages de connexion. L'assemblage de l'élément conducteur 24 à la plage de connexion 22C est expliqué en référence à la figure 2a). La plage de fixation 22C fait partie d'une pièce métallique de l'appareil électrique 20, la plage de fixation 22C dépassant à l'extérieur d'un boitier de l'appareil électrique 20. Seule la plage de fixation est représentée à la figure 2a), le reste de l'appareil électrique 20 étant caché pour ne pas surcharger la figure.

La plage de fixation 22C est ici percée d'un orifice 23. L'élément conducteur 24 comprend ici une patte 25A de fixation, qui est percée d'un trou 25B. L'assemblage entre la place de fixation 22C et la patte 25A est ici réalisé au moyen d'un écrou 98 et d'une vis 99. L'écrou 98 est réalisé ici par une plaquette métallique, de forme parallélépipédique, qui présente un orifice taraudé configuré pour coopérer avec la vis 99.

L'écrou 98 fait ici partie d'un élément de détection de surchauffe 100. L'élément de détection de surchauffe 100 est aussi dit simplement « élément de détection 100 » dans le cadre de la présente description. Dans le premier mode de réalisation de l'invention, l'élément de détection 100 comprend, outre l'écrou 98, un corps principal 102 et un noyau 104.

L'écrou 98 est configuré pour coopérer avec la vis de manière à serrer la plage de connexion 22C à la patte 25A. L'écrou 98 est réalisé en un matériau thermiquement conducteur. Ainsi, en cas d'échauffement de la connexion entre la plage de connexion 22C et la patte 25A, par exemple si la vis 99 n'est pas serrée correctement, l'écrou 98 transmet une partie de la chaleur dégagée au reste de l'élément de détection 100.

Le noyau 104 est réalisé en un matériau qui est thermiquement conducteur et isolant électriquement, par exemple en céramique.

Le corps principal 102 ménage une première cavité 106, dans laquelle est reçue le noyau 104, et une deuxième cavité 108, qui jouxte la première cavité 106 est dans laquelle est reçu l'écrou 98, de sorte que le noyau 104 est en contact de l'écrou 98. Le noyau 104 sert à transmettre la chaleur de l'écrou 98 au corps principal 102. Ainsi, lorsque l'écrou 98 s'échauffe, par exemple à cause d'une connexion électrique défaillante, alors l'ensemble de l'élément de détection 100 tend à s'échauffer.

Le corps principal 102 est réalisé dans un matériau thermosensible 110. Le matériau thermosensible 110 est injectable à chaud et isolant électriquement. Le matériau thermosensible 110 inclut les ingrédients suivants :
- une matrice, qui est réalisée en un premier matériau polymère thermoplastique présentant une première température de fusion T1,
- un plastifiant, qui présente une masse molaire donnée et une deuxième température de fusion T2, la deuxième température de fusion T2 étant inférieure à la première température de fusion T1, et
- une charge sous forme de particules, en particulier sous forme de poudre.

Le matériau polymère thermoplastique utilisé pour la matrice est par exemple du polyamide 66, noté PA66, du polyamide 6, noté PA6, du polybutylène téréphtalate, noté PBT, un élastomère thermoplastique, noté TPE, etc. De manière générale, le type de polymère thermoplastique ou d'élastomère thermoplastique utilisé n'est pas limité pour la mise en oeuvre de l'invention, tant que les caractéristiques de rigidité, de température de fusion, de résistance au vieillissement, à la chaleur, d'isolation électrique, etc., nécessaires à l'application envisagée sont atteintes.

De manière générale, dans le domaine de la plasturgie, des charges sont ajoutées à la matrice polymère ou élastomère pour modifier les propriétés du matériau, que ce soit pendant la fabrication, par exemple pour faciliter le démoulage, réduire le retrait, etc., ou bien pour la pièce finale, par exemple pour modifier sa densité, sa dureté, sa rigidité, sa couleur, etc. Dans le cadre de la présente invention, les charges utilisées sont des particules, autrement dit des poudres, de préférence électriquement isolantes. De préférence, les particules de charge utilisées présentent un diamètre compris comprise entre 0,1 µm et 100 µm. De préférence, la charge utilisée dans le cadre de la présente invention comprend du noir de carbone.

Les plastifiants sont aussi ajoutés à la matrice polymère thermoplastique pour en modifier les propriétés, notamment les propriétés mécaniques. Pour chaque polymère thermoplastique, il existe généralement plusieurs types de plastifiants compatibles, les critères de sélection connus étant notamment la polarité du plastifiant et celle de la matrice thermoplastique, les fonctions chimiques présentes sur le plastifiant et le thermoplastique pouvant générer des liaisons chimiques... La compatibilité peut notamment être estimée en utilisant les paramètres de solubilité d'Hildebrand.

Dans le cadre de l'invention, le matériau thermosensible dans son ensemble, et en particulier le plastifiant, sont conformes à la Directive Européenne RoHS - acronyme de l'anglais *Restriction of Hazardous Substances -* visant à limiter l'utilisation de substances dangereuses dans les équipements électriques et électroniques, au règlement européen REACH - acronyme de l'anglais *Registration, Evaluation, Autorisation and restriction of CHemicals -,* et ne comportant pas d'halogène - conformément au standard IEC63355:2022 - ni de polluant organique persistant, conformément au règlement européen UE 2019/1021 - dit règlement POP.

Lors de la fabrication du corps principal 102, dans un premier temps les ingrédients du matériau du corps principal sont mélangés les uns aux autres par malaxage à chaud, par exemple à l'aide d'une vis d'extrusion, de manière à préparer un mélange homogène, de préférence sous la forme de granulés. On obtient ainsi le matériau thermosensible 110. Cette étape de préparation du matériau thermosensible 110 par malaxage est aussi appelée *« compounding »* en anglais. Au cours de l'étape de préparation du matériau thermosensible 110, la température de malaxage est avantageusement supérieure, de 30°C à 50°C, à la première température de fusion T1. De préférence, le plastifiant est liquide à la température de malaxage, de manière à favoriser l'intégration du plastifiant à la matrice polymère.

Après l'étape de préparation du matériau thermosensible 110, le matériau thermosensible 110 est considéré comme homogène. Le matériau thermosensible 110 est ensuite utilisé comme matière première pour la fabrication du corps principal 102, qui est ici fabriqué par injection à chaud. Ainsi le matériau du corps principal 102 est considéré comme homogène.

De manière schématique, après injection et refroidissement, le polymère thermoplastique forme une matrice qui renferme le plastifiant et les charges. Lorsque l'élément de détection 100 s'échauffe, le plastifiant dégage des matières volatiles, si la température atteinte est suffisante, on peut parler d'un début de décomposition générant des volatiles ou des gaz. En outre, ces dégagements peuvent même entraîner des particules issues de la charge ajoutée au matériau. Il s'agit d'un processus progressif commençant par une migration du plastifiant et de particules de charge vers la surface du corps principal 102, générant du ressuage, puis une libération de volatiles de gaz et de particules de charge. Les volatiles ou gaz, et les particules issues des charges, entrainées par le flux de plastifiant, se retrouvent en suspension dans l'enceinte V10 de l'armoire électrique 10.

De manière surprenante, il a été constaté que le ressuage du plastifiant et/ou des composés volatils générés par le plastifiant et/ou des particules de charge n'était pas une fonction linéaire de la température, mais que la quantité de plastifiant et/ou de composés volatils et/ou de particules ressuée augmentait subitement lorsque la température du matériau dépassait un premier seuil de température prédéterminé. De manière surprenante, il a été également été constaté que le premier seuil de température variait en fonction de la masse molaire du plastifiant. La masse molaire, notée M, est exprimée en g/mol - gramme par mole -. Dit autrement, plus le premier seuil de température souhaité est élevé, et plus la masse molaire du plastifiant doit être élevée.

Ainsi, dans le cadre de l'invention, la masse molaire M du plastifiant est choisie en fonction du premier seuil de température, le premier seuil de température étant prédéterminé, lors de la conception de l'élément de détection 100, par l'utilisateur en fonction de l'application recherchée. Préférentiellement, le premier seuil de température est choisi entre 125°C ±10°C et 160°C ± 10°C, ce qui correspond à des températures usuelles de surveillance des échauffements dans le domaine des appareils électriques et des armoires électriques.

En pratique, le matériau polymère thermoplastique de la matrice est choisi en premier, notamment en fonction des contraintes techniques (mécaniques, thermiques, résistance au feu...) de la pièce à fabriquer. Ensuite, un ou plusieurs plastifiants, dont la masse molaire correspond au seuil de température envisagé, sont sélectionnés parmi les plastifiants compatibles avec le matériau polymère sélectionné, notamment selon les critères mentionnés précédemment de polarité, de solubilité, etc. De préférence, la température de dégradation du plastifiant est supérieure à la température de mise en œuvre du matériau.

Le premier seuil de température est strictement inférieur à une première température de fusion T1 de la matrice polymère thermoplastique. Le matériau thermosensible 110 est ainsi configuré pour relâcher autour du corps principal 102 un flux de plastifiant et de particules issues de la charge, les particules issues de la charge étant entraînées par le plastifiant, lorsque le matériau thermosensible 110 est soumis à une température supérieure au premier seuil de température. Le flux de plastifiant et de charge ainsi dégagé par l'échauffement au-delà du premier seuil de température est détectable par le dispositif de détection 30. Notamment, on va détecter des espèces volatiles, comme des gaz, dégagés par le ressuage de plastifiant, et/ou les particules entrainées par le flux de plastifiant.

Le dispositif de détection 30 est configuré pour détecter un flux de plastifiant et/ou de charges dans l'enceinte V10 de l'armoire électrique 10, et est configuré pour envoyer un signal d'alerte lorsqu'une concentration du plastifiant et/ou des charges dépasse un seuil de concentration prédéterminé, ce qui indique que la température du corps principal 102 dépasse le premier seuil de température. Le signal d'alerte est par exemple un signal auditif, et/ou un signal visuel, et/ou un signal transmis sous la forme d'un message électronique par l'intermédiaire d'une interface dédiée, filaire ou sans fil.

La technologie utilisée pour le dispositif de détection 30 n'est pas particulièrement limitée. Selon un premier exemple, le dispositif de détection 30 inclut un détecteur de composants organiques volatils, dits aussi COV - ou VOC en anglais -. Avantageusement, le dispositif de détection 30 est configuré pour détecter les molécules du plastifiant, ce qui inclut les molécules du plastifiant lui-même et/ou des molécules d'espèces volatiles dégagées par le plastifiant. Selon un deuxième exemple, le dispositif de détection 30 inclut un opacimètre, de manière à détecter les particules opaques en suspension dans l'enceinte, autrement dit pour détecter les charges entraînées lors du ressuage du plastifiant. Bien entendu, plusieurs technologies peuvent être combinées au sein du dispositif de détection 30, de manière à améliorer la fiabilité de la détection.

Selon un premier exemple d'application de l'invention, pour un premier seuil de température compris entre 115°C et 135°C, autrement dit pour un premier seuil de température égal à 125°C ±10°C, la masse molaire M du plastifiant est choisie entre 150 g/mol et 300 g/mol.

Selon une première formulation du matériau thermosensible 110 du corps principal 102 illustrant le premier exemple d'application :
- la matrice polymère thermoplastique est le polybutylène téréphtalate - PBT -,
- le plastifiant est le N-éthyl o/p-toluène sulfonamide, ce plastifiant présentant une masse molaire M de 199 g/mol et étant ajouté à hauteur de 6,75 % en poids de la matrice polymère, et
- les charges sont du noir de carbone, qui est ajouté à hauteur de 2% en poids de la formulation complète.

Des fibres de verre ont en outre été ajoutées à hauteur de 30% en poids de la matrice polymère ainsi qu'un retardateur de flamme sans halogène, cet ajout n'ayant pas gêné la mise en œuvre de l'invention. Par formulation complète, on entend la matrice polymère, le plastifiant, les charges incluant le noir de carbone, ainsi que d'autres éléments éventuels, qui ne sont pas nécessaires mais qui contribuent à la mise en œuvre de l'invention, notamment des renforts tels que des fibres de verre, d'autres additifs tels qu'un retardateur de flamme, etc.

Le matériau thermosensible 110 est ensuite produit par malaxage des ingrédients précités à l'aide d'une extrudeuse chauffante, sous la forme de granulés. Les granulés de matériau thermosensible 110 sont ensuite utilisés dans une presse d'injection à chaud pour fabriquer le corps principal 102 en matériau thermosensible 110.

Le corps principal 102 est ensuite assemblé à un noyau 104 et à l'écrou 98, de manière à obtenir un élément de détection de surchauffe du type de l'élément de détection de surchauffe 100, qui est ensuite monté sur une connexion électrique entre deux éléments conducteurs. Un courant électrique présentant une intensité contrôlée traverse ladite connexion électrique, de manière à provoquer un échauffement de cette connexion, une température de la connexion électrique étant surveillée par un détecteur à infrarouges. Il a été vérifié que le dispositif de détection 30 émettait un signal d'alarme lorsque la température de la connexion électrique atteignait le premier seuil de température, ici égal à 125°C ±10°C.

Selon une deuxième formulation du matériau thermosensible 110 du corps principal 102 illustrant le premier exemple d'application, la gamme de formulation suivante permet de fabriquer le matériau thermosensible 110 particulièrement adapté à la détection d'échauffement avec un premier seuil de température égal à 125°C ±10°C :
- la matrice polymère est un polyamide 6 - PA6
- le plastifiant est le N-éthyl o/p-toluène sulfonamide, ce plastifiant présentant une masse molaire M de 199 g/mol et étant ajouté à hauteur de 6,75 % en poids de la matrice polymère, et
- les charges sont du noir de carbone, qui est ajouté à hauteur de 2% en poids de la formulation complète.

Des fibres de verre ont en outre été ajoutées à hauteur de 30% en poids de la matrice polymère ainsi qu'un retardateur de flamme sans halogène, cet ajout n'ayant pas gêné la mise en œuvre de l'invention.

Plus généralement, la gamme de formulation suivante permet de fabriquer un matériau thermosensible 110 particulièrement adapté à la détection d'échauffement avec un premier seuil de température égal à 125°C ±10°C :
- la matrice polymère est un PBT ou PA6,
- le plastifiant est le N-éthyl o/p-toluène sulfonamide ajouté entre 4% et 15% en poids relatif à la matrice polymère,
- les charges de noir de carbone sont ajoutées entre 2 et 3 % en poids de la formulation complète.

Selon un deuxième exemple d'application de l'invention, pour un premier seuil de température compris entre 150°C et 170°C, autrement dit pour un premier seuil de température égal à 160°C ±10°C, la masse molaire M du plastifiant est choisie entre 400 g/mol et 500 g/mol.

Selon une troisième formulation du matériau thermosensible 110 illustrant le deuxième exemple d'application :
- la matrice est un élastomère polyester thermoplastique - TPE-E -,
- le plastifiant est l'ester diisononylique d'acide 1,2-cyclohexane dicarboxylique (en anglais *1,2-Cyclohexane dicarboxylic acid diisononyl ester*), noté DINCH, ce plastifiant présentant une masse molaire M de 425 g/mol et étant ajouté à hauteur de 5% en poids de la matrice polymère, et
- les charges sont du noir de carbone, qui est ajouté à hauteur de 2% en poids de la formulation complète.

Le même protocole d'essai que pour le premier exemple d'application décrit ci-dessus a été mis en œuvre. Il a été vérifié que le dispositif de détection 30 émettait un signal d'alarme lorsque la température de la connexion électrique - autrement dit la température du matériau thermosensible 110 - atteignait le premier seuil de température, ici égal à 160°C ±10°C.

Selon une quatrième formulation du matériau thermosensible 110 illustrant le deuxième exemple d'application :
- la matrice polymère est un élastomère polyester thermoplastique - TPE-E ,
- Le plastifiant est le DINCH, ce plastifiant présentant une masse molaire M de 425 g/mol et étant ajouté à hauteur de 15% en poids de la matrice polymère, et
- du noir de carbone comme charges, le noir de carbone étant ajouté à hauteur de 2% en poids de la formulation complète.

Le même protocole d'essai que ci-dessus a été mis en œuvre. Il a été vérifié que le dispositif de détection 30 émettait un signal d'alarme lorsque la température du matériau thermosensible 110 atteignait le premier seuil de température, ici égal à 160°C ±10°C.

Plus généralement, la gamme de formulation suivante permet de fabriquer un matériau thermosensible 110 particulièrement adapté à la détection d'échauffement avec un premier seuil de température égal à 160°C ±10°C :
- la matrice polymère est un élastomère polyester thermoplastique - TPE-E ,
- le plastifiant est le DINCH, ajouté entre 4% et 15% en poids relatif à la matrice polymère,
- les charges de noir de carbone sont ajoutés entre 2 et 3 % en poids de la formulation complète.

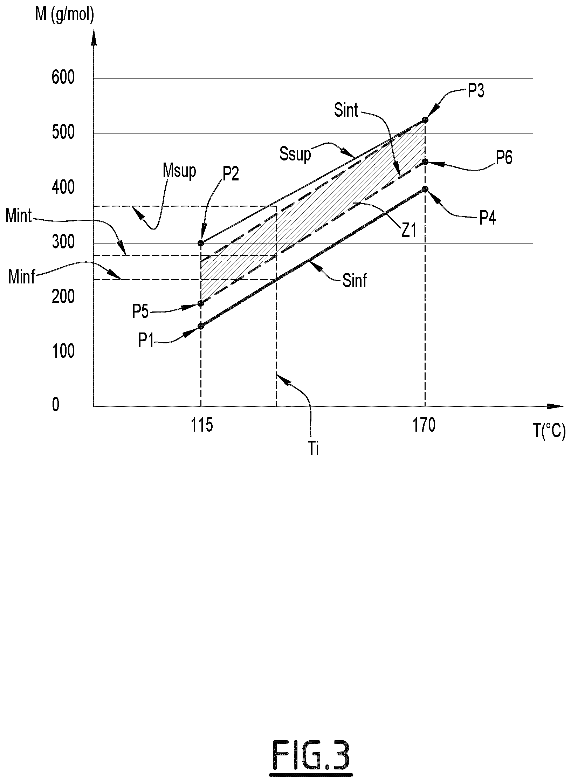

La figure 3 est un graphe 180 illustrant, dans le cadre de l'invention, une gamme de masse molaire du plastifiant, ladite gamme de masse molaire étant donnée en fonction du premier seuil de température choisi pour le matériau thermosensible 110. On a ainsi le premier seuil de température sur un axe des abscisses, et la masse molaire du plastifiant sur un axe des ordonnées. Le premier seuil de température et la masse molaire définissent sur le graphe 180 un système de coordonnées.

Ainsi, selon l'invention, le premier seuil et la masse molaire sont avantageusement situés à l'intérieur d'un quadrilatère délimité par quatre points, respectivement :
- un premier point P1 ayant pour coordonnées {115 ; 150},
- un deuxième point P2 ayant pour coordonnées {115 ; 300},
- un troisième point P3 ayant pour coordonnées {170 ; 525}, et
- un quatrième point P4 ayant pour coordonnées {170 ; 400}.

Le quadrilatère est ainsi délimité par un segment inférieur Sinf, qui relie le point P4 au point P1, et par un segment supérieur Ssup, qui relie le point P2 au point P3.

À tout premier seuil de température intermédiaire, noté Ti, compris entre 115 et 170°C, correspond une unique masse molaire inférieure Minf, qui se lit sur le segment inférieur Sinf, et une unique masse molaire supérieure Msup, qui se lit sur le segment supérieur Ssup. Autrement dit, lorsque le premier seuil de température est égal à la température intermédiaire Ti, la gamme de masse molaire acceptable est comprise entre les masses molaires inférieure Minf et supérieure Msup.

De manière surprenante, il a été constaté que, pour une gamme acceptable de masses molaires associées à un premier seuil de température intermédiaire Ti donné, plus la masse molaire était élevée, moins l'élément de détection de surchauffe 100 était sensible au vieillissement.

Ainsi, de préférence, en représentation graphique, le premier seuil de température et la masse molaire sont situés à l'intérieur d'un quadrilatère délimité par quatre points, respectivement :
- un cinquième P5 point ayant pour coordonnées {115 ; 190},
- le deuxième point P2 ayant pour coordonnées {115 ; 300},
- le troisième point P3 ayant pour coordonnées {170 ; 525}, et
- un sixième point P6 ayant pour coordonnées {170 ; 450}.

On définit un segment intermédiaire Sint qui relie le cinquième point P5 au sixième point P6. À tout premier seuil de température intermédiaire Ti correspond une unique masse molaire intermédiaire Mint, qui se lit sur le segment intermédiaire Sint. Ainsi, de préférence, lorsque le premier seuil de température est égal à la température intermédiaire Ti, la gamme de masse molaire préférée est comprise entre les masses molaires intermédiaire Mint et supérieure Msup.

De préférence encore, en représentation graphique, le premier seuil de température intermédiaire Ti et la masse molaire sont situés dans une bande bordée sur le bas par le segment intermédiaire Sint reliant le cinquième point P5 au sixième point P2, la bande ayant une largeur, mesurée parallèlement à l'axe des ordonnées, égale à 75g / mol. Sur la figure 3, la bande est représentée par une zone grisée Z1.

L'invention concerne aussi une méthode de détection d'échauffement dans l'armoire électrique 10, la méthode de détection comprenant :
- fournir l'armoire électrique 10,
- faire circuler un courant électrique au travers de l'équipement électrique, de manière à provoquer un échauffement du matériau thermosensible 110 de l'élément de détection de surchauffe 100 au-delà du premier seuil de température Ti et dégager, autour de l'élément de détection 100, un flux de plastifiant et/ou d'espèces volatiles issues du plastifiant échauffé et/ou de particules de charge entraînées par le plastifiant,
- détecter, au moyen du dispositif de détection 30, le flux de plastifiant et/ou d'espèces volatiles issues du plastifiant échauffé et/ou les particules de charge entraînées par le plastifiant.

Les éléments de détection de surchauffe 100 selon l'invention sont particulièrement avantageux car ils permettent la surveillance en continu des équipements électriques reçus dans l'armoire électrique 10, tout en restant peu couteux à installer ou à fabriquer, ici par des moyens classiques d'injection à chaud du corps principal 102.

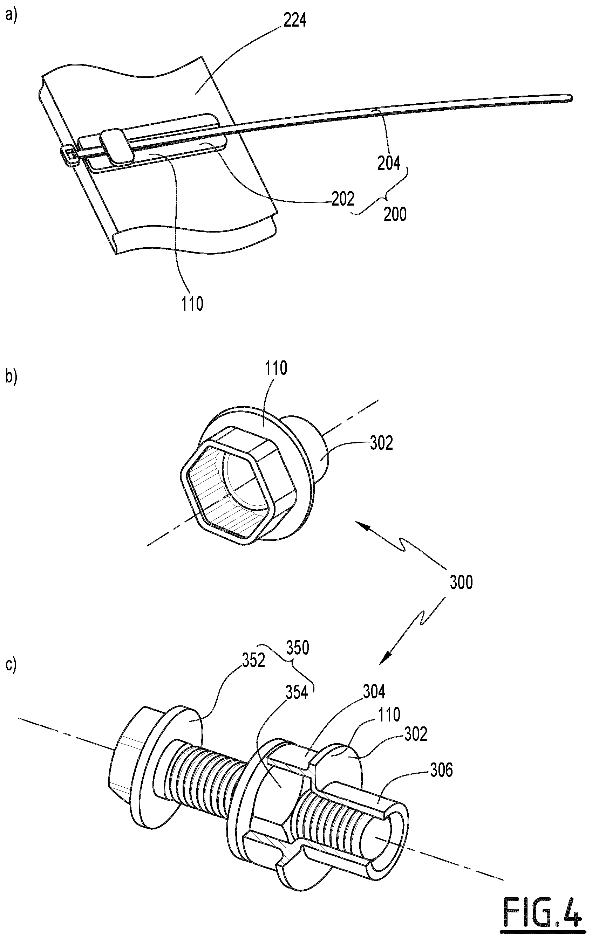

Un élément de détection de surchauffe 200 conforme à un deuxième mode de réalisation de l'invention est représenté à la figure 4a). Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

L'élément de détection de surchauffe 200 comprend un corps principal 202, qui est réalisé en un matériau thermosensible similaire au matériau thermosensible 110 du corps principal 102 de l'élément de détection de surchauffe 100 conforme au premier mode de réalisation de l'invention, c'est-à-dire incluant :
- une matrice polymère, réalisée en un premier matériau polymère thermoplastique présentant une première température de fusion, et
- un plastifiant, présentant une masse molaire et une deuxième température de fusion, la deuxième température de fusion étant inférieure à la première température de fusion, et
- une charge sous forme de poudre,
dans lequel la masse molaire du plastifiant est choisie en fonction du premier seuil de température.

Le corps principal 202 présente ici une forme de parallélépipède aplati et est configuré pour être placé contre un élément conducteur 224, ici un bus conducteur. L'élément de détection de surchauffe 200 comprend ici une ligature 204, qui sert à fixer le corps principal 202 à l'élément conducteur 224.

Un élément de détection de surchauffe 300 conforme à un troisième mode de réalisation de l'invention est représenté aux figures 4b) et 4c). Dans le troisième mode de réalisation, les éléments analogues à ceux des modes de réalisation précédents portent les mêmes références et fonctionnent de la même façon. Dans ce qui suit, on décrit principalement les différences entre le troisième mode de réalisation et les modes de réalisation précédents.

L'élément de détection de surchauffe 300 comprend un corps principal 302, qui est réalisé en un matériau thermosensible similaire au matériau thermosensible 110 du corps principal 102 de l'élément de détection de surchauffe 100 conforme au premier mode de réalisation de l'invention, c'est-à-dire incluant :
- une matrice polymère, réalisée en un premier matériau polymère thermoplastique présentant une première température de fusion, et
- un plastifiant, présentant une masse molaire et une deuxième température de fusion, la deuxième température de fusion étant inférieure à la première température de fusion, et
- une charge sous forme de poudre,
dans lequel la masse molaire du plastifiant est choisie en fonction du premier seuil de température.

L'élément de détection de surchauffe 300 est ici configuré pour être monté sur un boulon 350, le boulon comprenant une vis 352 et un écrou 354. Le boulon 350 sert par exemple à l'assemblage de deux bus conducteurs, ou bien à l'assemblage d'un câble à un appareil électrique, etc. L'élément de détection de surchauffe 300 est ici réalisé d'une seule pièce par injection à chaud, le corps principal 302 comprenant une paroi 303, qui présente globalement une forme d'anneau avec un orifice central, le corps principal 302 comprenant une jupe 304, qui s'étend d'un côté de la paroi 303, et une cheminée 306, qui s'étend d'un autre côté de la paroi 303, à l'opposé de la jupe 304.

La jupe 304 présente une forme de cylindre à section hexagonale, la jupe 304 étant configurée pour coopérer, notamment par complémentarité de formes, avec l'écrou 354, de manière à fixer l'élément de détection de surchauffe 300 à l'écrou 354, tandis qu'une extrémité d'une tige de la vis 352 traverse l'orifice central de la paroi 303 et est reçue dans la cheminée 306.

Plus généralement, au vu des trois exemples de capteur de surchauffe 100, 200 et 300, on comprend que les éléments de détection de surchauffe conformes à l'invention peuvent être façonné de multiples manières, avec de multiples formes, de manière à faciliter la mise en place de ces éléments de détection de surchauffe dans une armoire électrique.

## Revendications

1. Matériau thermosensible (110) pour un élément de détection de surchauffe (100 ; 200 ; 300), dans lequel :
- le matériau thermosensible (110) est un matériau injectable à chaud et isolant électriquement, le matériau thermosensible (110) incluant :
• une matrice polymère, réalisée en un matériau polymère thermoplastique ou en élastomère thermoplastique présentant une première température de fusion (T1),
• un plastifiant, présentant une masse molaire (M) et une deuxième température de fusion (T2), la deuxième température de fusion (T2) étant inférieure à la première température de fusion (T1), et
• une charge sous forme de particules, notamment du noir de carbone,
- la masse molaire (M) du plastifiant est choisie en fonction d'un premier seuil de température (Ti) prédéterminé, le premier seuil étant strictement inférieur à la première température de fusion (T1), de sorte que le matériau thermosensible (110) est configuré pour relâcher des espèces volatiles issues du plastifiant échauffé et des particules de charge entraînées par le plastifiant lorsque le matériau thermosensible est soumis à une température supérieure au premier seuil de température (Ti), lesdites espèces volatiles issues du plastifiant et des particules de charge étant détectables par un dispositif de détection (30).

2. Matériau thermosensible (110) selon la revendication 1, dans lequel :
- le premier seuil de température (Ti) est choisi entre 125°C ±10°C et 160°C ± 10°C,
- pour un premier seuil de température (Ti) donné, la masse molaire (M) du plastifiant est comprise entre une valeur minimale (Sinf) et une valeur maximale (Ssup),
- sur un graphe reliant le premier seuil de température (Ti) sur un axe des abscisses à la masse molaire (M) du plastifiant sur un axe des ordonnées, le premier seuil de température (Ti) et la masse molaire (M) définissent un système de coordonnées, le premier seuil de température (Ti) et la masse molaire (M) étant situés à l'intérieur d'un quadrilatère délimité par quatre points, respectivement :
• un premier point (P1) ayant pour coordonnées {115 ; 150},
• un deuxième point (P2) ayant pour coordonnées {115 ; 300},
• un troisième point (P3) ayant pour coordonnées {170 ; 525}, et
• un quatrième point (P4) ayant pour coordonnées {170 ; 400}.

3. Matériau thermosensible (110) selon la revendication 2, dans lequel :
- en représentation graphique, le premier seuil de température (Ti) et la masse molaire (M) sont situés à l'intérieur d'un quadrilatère délimité par quatre points, respectivement :
• un cinquième point ayant pour coordonnées {115 ; 190},
• le deuxième point ayant pour coordonnées {115 ; 300},
• le troisième point ayant pour coordonnées {170 ; 525}, et
• un sixième point ayant pour coordonnées {170 ; 450}.

4. Matériau thermosensible (110) selon la revendication 3, dans lequel :
- en représentation graphique, le premier seuil de température (Ti) et la masse molaire (M) sont situés dans une bande bordée, sur le bas, par un segment intermédiaire reliant le cinquième point au sixième point, la bande ayant une largeur, mesurée parallèlement à l'axe des ordonnées, égale à 75 g / mol.

5. Matériau thermosensible (110) selon l'une quelconque des revendications 1 à 4, dans lequel :
- un taux d'addition du plastifiant est compris entre 4% et 15% en poids relativement au poids de la matrice polymère thermoplastique.

6. Matériau thermosensible (110) selon l'une quelconque des revendications 1 à 5, dans lequel :
- la charge est ajoutée entre 2 et 3% en poids relativement à la formulation complète du matériau thermosensible (110).

7. Matériau thermosensible (110) selon l'une quelconque des revendications 1 à 5, dans lequel :
- la charge est du noir de carbone.

8. Matériau thermosensible (110) selon l'une quelconque des revendications 1 à 7, dans lequel :
- la matrice polymère est le polyéthylène téréphtalate,
- le plastifiant est le DINCH (1,2-Cyclohexane dicarboxylic acid diisononyl ester), ajouté entre 4% et 15% en poids relatif à la matrice polymère.

9. Matériau thermosensible (110) selon l'une quelconque des revendications 1 à 7, dans lequel :
- la matrice polymère est le polyamide 6/6,
- le plastifiant est le N-Ethyl o/p-toluene sulphonamide, qui est ajouté entre 4 et 15% en poids de la matrice polymère.

10. Matériau thermosensible (110) selon l'une quelconque des revendications 1 à 7, dans lequel :
- la matrice polymère est le polybutylène téréphtalate,
- le plastifiant est le N-Ethyl o/p-toluène sulphonamide, qui est ajouté entre 4 et 15% en poids de la matrice polymère.

11. Élément de détection de surchauffe (100 ; 200 ; 300), comprenant un corps (102 ; 202 ; 302) réalisé dans le matériau thermosensible (110) conforme à l'une quelconque des revendications 1 à 10.

12. Équipement électrique (20), comprenant un conducteur électrique (22) configuré pour être traversé par un courant électrique, dans lequel :
- l'équipement électrique (20) comprend aussi un élément de détection de surchauffe (100) selon la revendication 11,
- l'élément de détection de surchauffe (100) est fixé sur le conducteur électrique (22).

13. Armoire électrique (10), dans laquelle :
- l'armoire électrique (10) délimite une enceinte (V10), et comprend :
• un équipement électrique (20) selon la revendication 12 ;
• un dispositif de détection (30), configuré pour détecter le flux de plastifiant et/ou de charges relâché par le matériau thermosensible (110) autour de l'élément de détection de surchauffe (100) lorsque la température du matériau thermosensible (110) dépasse le premier seuil de température (Ti),
- l'élément de détection de surchauffe (100) et le dispositif de détection (30) sont situés dans l'enceinte (V10) de l'armoire électrique.

14. Méthode de détection d'échauffement dans une armoire électrique (10), la méthode de détection comprenant :
- fournir une armoire électrique (10) conforme à la revendication 13,
- faire circuler un courant électrique au travers de l'équipement électrique (20), de manière à provoquer un échauffement de l'élément de détection de surchauffe (100) au-delà du premier seuil de température (Ti) et dégager, autour du corps (102) réalisé dans le matériau thermosensible (110), un flux de plastifiant et/ou d'espèces volatiles issues du plastifiant échauffé et/ou de particules de charge entraînées par le plastifiant,
- détecter le flux de plastifiant et/ou d'espèces volatiles issues du plastifiant échauffé et/ou de particules de charge entraînées par le plastifiant au moyen du dispositif de détection (30).

## Patentansprüche

1. Thermosensitives Material (110) für ein Überhitzungsdetektionselement (100 ; 200 ; 300), wobei:
- das thermosensitives Material (110) ein heiß einspritzbares und elektrisch isolierendes Material ist, wobei das thermosensitives Material (110) einschließt:
• eine Polymermatrix, hergestellt aus einem thermoplastischen Polymermaterial oder aus thermoplastischem Elastomer, das eine erste Schmelztemperatur (T1) aufweist,
• einen Weichmacher, der eine Molmasse (M) und eine zweite Schmelztemperatur (T2) aufweist, wobei die zweite Schmelztemperatur (T2) niedriger als die erste Schmelztemperatur (T1) ist, und
• einen Füllstoff in Form von Partikeln, insbesondere Ruß,
- die Molmasse (M) des Weichmachers in Abhängigkeit von einem ersten vorbestimmten Temperaturschwellenwert (Ti) ausgewählt ist, wobei der erste Schwellenwert strikt niedriger als die erste Schmelztemperatur (T1) ist, sodass das thermosensitives Material (110) dazu konfiguriert ist, flüchtige Spezies, die aus dem erwärmten Weichmacher hervorgehen, und Füllstoffpartikel, die durch den Weichmacher mitgerissen werden, freizusetzen, wenn das thermosensitives Material einer Temperatur oberhalb des ersten Temperaturschwellenwerts (Ti) ausgesetzt wird, wobei die flüchtigen Spezies, die aus dem Weichmacher hervorgehen, und die Füllstoffpartikel durch eine Detektionsvorrichtung (30) detektierbar sind.

2. Thermosensitives Material (110) nach Anspruch 1, wobei:
- der erste Temperaturschwellenwert (Ti) zwischen 125°C ±10°C und 160°C ±10°C ausgewählt ist,
- für einen gegebenen ersten Temperaturschwellenwert (Ti) die Molmasse (M) des Weichmachers zwischen einem Minimalwert (Sinf) und einem Maximalwert (Ssup) enthalten ist,
- auf einem Graphen, der den ersten Temperaturschwellenwert (Ti) auf einer Abszissenachse mit der Molmasse (M) des Weichmachers auf einer Ordinatenachse verbindet, der erste Temperaturschwellenwert (Ti) und die Molmasse (M) ein Koordinatensystem definieren, wobei der erste Temperaturschwellenwert (Ti) und die Molmasse (M) innerhalb eines Vierecks angeordnet sind, das durch vier Punkte begrenzt wird, jeweils:
• einen ersten Punkt (P1) mit den Koordinaten {115 ; 150},
• einen zweiten Punkt (P2) mit den Koordinaten {115 ; 300},
• einen dritten Punkt (P3) mit den Koordinaten {170 ; 525}, und
• einen vierten Punkt (P4) mit den Koordinaten {170 ; 400}.

3. Thermosensitives Material (110) nach Anspruch 2, wobei:
- in grafischer Darstellung der erste Temperaturschwellenwert (Ti) und die Molmasse (M) innerhalb eines Vierecks angeordnet sind, das durch vier Punkte begrenzt wird, jeweils:
• einen fünften Punkt mit den Koordinaten {115 ; 190},
• den zweiten Punkt mit den Koordinaten {115 ; 300},
• den dritten Punkt mit den Koordinaten {170 ; 525}, und
• einen sechsten Punkt mit den Koordinaten {170 ; 450}.

4. Thermosensitives Material (110) nach Anspruch 3, wobei:
- in grafischer Darstellung der erste Temperaturschwellenwert (Ti) und die Molmasse (M) in einem Band angeordnet sind, das unten durch ein Zwischensegment begrenzt ist, das den fünften Punkt mit dem sechsten Punkt verbindet, wobei das Band eine Breite aufweist, die parallel zur Ordinatenachse gemessen wird, gleich 75 g / mol.

5. Thermosensitives Material (110) nach einem der Ansprüche 1 bis 4, wobei:
- ein Zugabeanteil des Weichmachers zwischen 4% und 15% nach Gewicht bezogen auf das Gewicht der thermoplastischen Polymermatrix enthalten ist.

6. Thermosensitives Material (110) nach einem der Ansprüche 1 bis 5, wobei:
- der Füllstoff zwischen 2 und 3% nach Gewicht bezogen auf die vollständige Formulierung des thermosensiblen Materials (110) zugesetzt ist.

7. Thermosensitives Material (110) nach einem der Ansprüche 1 bis 5, wobei:
- der Füllstoff Ruß ist.

8. Thermosensitives Material (110) nach einem der Ansprüche 1 bis 7, wobei:
- die Polymermatrix Polyethylenterephthalat ist,
- der Weichmacher DINCH (1,2-Cyclohexandicarbonsäurediisononylester) ist, zugesetzt zwischen 4% und 15% nach Gewicht bezogen auf die Polymermatrix.

9. Thermosensitives Material (110) nach einem der Ansprüche 1 bis 7, wobei:
- die Polymermatrix Polyamid 6/6 ist,
- der Weichmacher N-Ethyl-o/p-toluenesulfonamid ist, der zwischen 4 und 15% nach Gewicht der Polymermatrix zugesetzt ist.

10. Thermosensitives Material (110) nach einem der Ansprüche 1 bis 7, wobei:
- die Polymermatrix Polybutylenterephthalat ist,
- der Weichmacher N-Ethyl-o/p-toluenesulfonamid ist, der zwischen 4 und 15% nach Gewicht der Polymermatrix zugesetzt ist.

11. Überhitzungsdetektionselement (100 ; 200 ; 300), umfassend einen Körper (102 ; 202 ; 302), der aus dem thermosensitiven Material (110) gemäß einem der Ansprüche 1 bis 10 hergestellt ist.

12. Elektrische Ausrüstung (20), umfassend einen elektrischen Leiter (22), der dazu konfiguriert ist, von einem elektrischen Strom durchflossen zu werden, wobei:
- die elektrische Ausrüstung (20) auch ein Überhitzungsdetektionselement (100) nach Anspruch 11 umfasst,
- das Überhitzungsdetektionselement (100) an dem elektrischen Leiter (22) befestigt ist.

13. Schaltschrank (10), wobei:
- der Schaltschrank (10) einen Innenraum (V10) begrenzt, und umfasst:
• eine elektrische Ausrüstung (20) nach Anspruch 12 ;
• eine Detektionsvorrichtung (30), die dazu konfiguriert ist, den Strom von Weichmacher und/oder von Füllstoffen zu detektieren, der durch das thermosensitives Material (110) um das Überhitzungsdetektionselement (100) herum freigesetzt wird, wenn die Temperatur des thermosensitiven Materials (110) den ersten Temperaturschwellenwert (Ti) überschreitet,
- das Überhitzungsdetektionselement (100) und die Detektionsvorrichtung (30) in dem Innenraum (V10) des Schaltschranks angeordnet sind.

14. Verfahren zur Detektion von Erwärmung in einem Schaltschrank (10), wobei das Detektionsverfahren umfasst:
- Bereitstellen eines Schaltschranks (10) gemäß Anspruch 13,
- einen elektrischen Strom durch die elektrische Ausrüstung (20) fließen lassen, derart, dass eine Erwärmung des Überhitzungsdetektionselements (100) über den ersten Temperaturschwellenwert (Ti) hinaus hervorgerufen wird und, um den Körper (102) herum, der aus dem thermosensitiven Material (110) hergestellt ist, ein Strom von Weichmacher und/oder von flüchtigen Spezies, die aus dem erwärmten Weichmacher hervorgehen, und/oder von Füllstoffpartikeln, die durch den Weichmacher mitgerissen werden, freigesetzt wird,
- den Strom von Weichmacher und/oder von flüchtigen Spezies, die aus dem erwärmten Weichmacher hervorgehen, und/oder von Füllstoffpartikeln, die durch den Weichmacher mitgerissen werden, mittels der Detektionsvorrichtung (30) detektieren.

## Claims

1. A heat-sensitive material (110) for an overheating detection element (100; 200; 300), wherein:
- the heat-sensitive material (110) is an electrically insulating, heat injectable material, the heat-sensitive material (110) including:
• a polymer matrix, made of a thermoplastic polymer material or thermoplastic elastomer having a first melting temperature (T1),
• a plasticizer, having a molecular weight (M) and a second melting temperature (T2), the second melting temperature (T2) being lower than the first melting temperature (T1), and
• a filler in the form of particles, in particular carbon black,
- the molar weight (M) of the plasticizer is chosen according to a first predetermined temperature threshold (Ti), the first threshold being strictly lower than the first melting temperature (T1), so that the heat-sensitive material (110) is configured to release volatile species coming from the heated plasticizer and filler particles entrained by the plasticizer when the heat-sensitive material is subjected to a temperature higher than the first temperature threshold (Ti), said volatile species coming from the plasticizer and from the filler particles being detectable by a detection device (30).

2. The heat-sensitive material (110) according to claim 1, wherein:
- the first temperature threshold (Ti) is chosen between 125°C ±10°C and 160°C ± 10°C,
- for a first given temperature threshold (Ti), the molar weight (M) of the plasticizer lies between a minimum value (Sinf) and a maximum value (Ssup),
- on a graph linking the first temperature threshold (Ti) on an x-axis to the molar weight (M) of the plasticizer on a y-axis, the first temperature threshold (Ti) and the molar weight (M) define a coordinate system, the first temperature threshold (Ti) and the molar weight (M) being located within a quadrilateral bounded by four points:
• a first point (P1) with the coordinates {115; 150},
• a second point (P2) with the coordinates {115; 300},
• a third point (P3) with the coordinates {170; 525}, and
• a fourth point (P4) with the coordinates {170; 400}, respectively.

3. The heat-sensitive material (110) according to claim 2, wherein:
- in graphical representation, the first temperature threshold (Ti) and the molar weight (M) are located within a quadrilateral bounded by four points:
• a fifth point with coordinates {115; 190},
• the second point with coordinates {115; 300},
• the third point with coordinates {170; 525}, and
• a sixth point with the coordinates {170; 450}, respectively.

4. The heat-sensitive material (110) according to claim 3, wherein:
- in graphical representation, the first temperature threshold (Ti) and the molar weight (M) are located in a band bordered, on the bottom, by an intermediate segment connecting the fifth point to the sixth point, the band having a width, measured parallel to the ordinate axis, equal to 75 g / mol.

5. The material (110) according to any of claims 1 to 4, wherein:
- a degree of addition of the plasticizer is comprised between 4% and 15% by weight relative to the weight of the thermoplastic polymer matrix.

6. The heat-sensitive material (110) according to any of claims 1 to 5, wherein:
- the filler is added between 2 and 3% by weight relative to the complete formulation of the heat-sensitive material (110).

7. The heat-sensitive material (110) according to any of claims 1 to 5, wherein:
- the filler is carbon black.

8. The heat-sensitive material (110) according to any of claims 1 to 7, wherein:
- the polymer matrix is polyethylene terephthalate,
- the plasticizer is DINCH (1,2-cyclohexane dicarboxylic acid diisononyl ester), added between 4% and 15% by weight relative to the polymer matrix.

9. The heat-sensitive material (110) according to any of claims 1 to 7, wherein:
- the polymer matrix is polyamide 6/6,
- the plasticizer is N-ethyl o/p-toluene sulfonamide, which is added between 4 and 15% by weight of the polymer matrix.

10. The heat-sensitive material (110) according to any of claims 1 to 7, wherein:
- the polymer matrix is polybutylene terephthalate,
- the plasticizer is N-ethyl o/p-toluene sulfonamide, which is added between 4 and 15% by weight of the polymer matrix.

11. An overheating detection element (100; 200; 300), comprising a body (102; 202; 302) made of the heat-sensitive material (110) according to any of claims 1 to 10.

12. An electrical equipment item (20), comprising an electrical conductor (22) configured to let flow through an electrical current, wherein:
- the electrical equipment item (20) further comprises an overheating detection element (100) according to claim 11,
- the overheating detection element (100) is fastened to the electric conductor (22).

13. An electrical cabinet (10), wherein:
- the electrical cabinet (10) delimits an enclosure (V10), and comprises:
• an electric equipment item (20) according to claim 12;
• a detection device (30), configured to detect the flow of plasticizer and/or fillers released by the heat-sensitive material (110) around the overheat detection element (100) when the temperature of the heat-sensitive material (110) exceeds the first temperature threshold (Ti),
- the overheating detection element (100) and the detection device (30) are located in the enclosure (V10) of the electrical cabinet.

14. A method for the detection of overheating in an electrical cabinet (10), the detection method comprising:
- providing an electrical cabinet (10) according to claim 13,
- circulating an electric current through the electrical equipment (20) in such a way as to cause the overheating detection element (100) to heat above the first temperature threshold (Ti) and to release, around the body (102) made of the heat-sensitive material (110), a flow of plasticizer and/or volatile species coming from the heated plasticizer and/or from filler particles entrained by the plasticizer,
- detecting the flow of plasticizer and/or volatile species from the heated plasticizer and/or filler particles entrained by the plasticizer by means of the detection device (30).
